# EUROPEAN PATENT APPLICATION

(11) **EP 0 894 678 A1**
(43) Date of publication of application: **03.02.1999**
(21) Application number: 98306060.9
(22) Date of filing: 29.07.1998
(51) Int. Cl.: B60R 19/56, B60R 19/26

(54) **Underrun guard for road vehicles**

(30) Priority: 29.07.1997 GB 9716015; 02.06.1998 US 88481
(71) Applicant: Hope Technical Sales and Service Ltd., Berkshire, SL5 7HP (GB)
(72) Inventor: Hope, Frederick John Charles, Chobham, Surrey, GU24 8JF (GB); Hope, Robert James, Chobham, Surrey, GU24 8JF (GB)
(74) Representative: BROOKES & MARTIN

(57) **Abstract**

An underrun guard for a road transport vehicle is disclosed comprising a beam (1) intended to be supported across the rear (7) of the vehicle by support means which yield under a force which would otherwise be likely to cause damage to the vehicle. The support means comprises at least one first plate (5) for attachment to the beam and at least one second plate (6) for attachment to the vehicle, and clamping means (4) for clamping the plates together while permitting relative pivoting movement between said first and second plates when a substantial force is applied to the beam. A high friction element may be sandwiched between the first and second plates (5,6) to increase the sliding friction generated on relative movement of the plates, thereby increasing the reaction force restraining such movement.

## Description

This invention relates to underrun guards for motor vehicles in which a horizontal beam is fitted to the vehicle to reduce the risk of smaller vehicles being forced beneath the guarded vehicle in a collision.

It has long been recognised in many countries that deaths and injuries can be reduced in road accidents involving road transport vehicles by providing underrun bumpers or guards, especially at the rear of the road transport vehicle. What often happens in a rear end impact collision is that a passenger car runs beneath the rear end of a transport vehicle with the result that the passenger compartment is totally crushed. This gives rise to a much greater risk of serious injuries or death among passengers in the car.

As a result, in many jurisdictions, regulations have been introduced requiring road transport vehicles to fit a protective guard or bumper at least at the rear of the vehicle, to prevent so-called underrun accidents. While a fixed, rigid beam supported from brackets depending from the chassis will meet safety requirements of many countries, a problem with such rigid guards is that in every day use they tend to be damaged or deformed, e.g. by reversing the vehicle into loading bays and loading bay equipment or in collision with loading vehicle such as forklift trucks. Once the guard is damaged, the operator of the transport vehicle is no longer confident that the guard meets the requirement of the relevant legislation in the country in which the vehicle is used.

Also, in the event that damage does occur, the operator may not be confident that the guard meets the specification required unless the complete guard is replaced.

There have also been proposals to employ vehicle underrun guards in which the impact energy arising from a collision is absorbed by hydraulic or pneumatic cylinders, or by a sacrificial, deformable component. A problem with these designs is that, generally, they are too expensive or require constant maintenance to ensure that they meet safety and legislative requirements.

An object of the present invention is, therefore, to provide a underrun guard for a road transport vehicle which is capable of reliably absorbing energy of impact up to the requirements of relevant legislation, which is economical to manufacture and which after a low or moderate energy impact is readily restored to full operating use in a way which complies with the relevant legislation.

According to one aspect of the present invention there is provided an underrun guard for a road transport vehicle having a front and a rear end which comprises a beam intended to be supported across the rear end of the vehicle by support means, said support means comprising a bracket for attachment to the rear of the vehicle and a frictional restraint interposed between the bracket and the beam, said restraint being adapted to absorb impact energy applied to the beam and to permit the beam to pivot to prevent excessive damage to the beam.

The invention also includes a road transport vehicle having a road transport vehicle having a front portion and a rear portion and an underrun guard fitted to said rear portion to reduce the risk of a second vehicle smaller than said road transport vehicle being forced under said rear portion in a collision, said guard comprising a beam extending horizontally substantially across said rear portion and support means for supporting said beam, said support means comprising a first plate fixedly attached to the beam or to said rear portion and a second plate fixedly attached to the other of said vehicle or beam, said first and second plates being pivotally connected to each other so that relative pivoting movement of said plates is resisted by a frictional restraint interposed between said plates.

The frictional restraint preferably comprises at least two plates which are clamped together, one of which is secured to the rear portion of the vehicle and the other to the beam. The two plates are capable of pivotal movement with respect to each other but such pivotal movement is resisted by frictional contact between surfaces of the plates, or between the surfaces of the plates and a frictional element sandwiched between the plates. The degree of restraint can be tailored for specific requirements by adjustment of the clamping pressure, provision of a larger frictional contact area, e.g. by providing a multiplicity of plates, and/or by providing a high friction material between the contacting surfaces of the plates. Most conveniently, one or more frictional elements are interposed between the plates, although it is possible to coat the contacting portions of the plates with material having a high coefficient of friction.

Materials which may be used as the frictional element include plastics materials, e.g. acetal or pvc or a metal or metal oxide or friction material. Where steel is employed to form the support means, the frictional element which is sandwiched between them may comprise a different metal, e.g. brass. The preferred frictional element is manufactured from non-asbestos brake lining material, which is capable of withstanding the elevated temperatures and shear forces generated by high friction. Suitable materials include materials used for clutch linings.

Conveniently, the beam is supported at two points to the vehicle. Typically, legislation requires the fixing points to be within about 350 to about 640 mm outwardly from the center-line of the vehicle.

Preferably, each support means comprises a first plate fixedly attached at one end to the beam or the vehicle and a pair of clamping plates for clamping a segment of the first plate therebetween. The clamping or quadrant plates are fixedly attached at one end of the other of the vehicle and the beam and all three plates are pivotally mounted about a common pivot point. The clamping plates, which may be in the form of a quadrant, may be held together sandwiching a sector of the first plate therebetween by one or more clamping bolts which pass through slots in the clamping plates and/or in the first plate. By selecting the coefficient of friction between the plates (or between the plates and an interposed high friction element), the contacting area and the torque under which the clamping bolts are tightened, the degree of frictional restraint which resists pivoting movement of the plates can be established. The energy absorbed by the guard when sustaining an impact to the beam is calculated by applying a known force to the beam and measuring the deflection of the beam. The energy absorbed is the area under the force-deflection curve when these values are plotted graphically.

The degree of restraint exerted by the plates will be selected depending on the legislation in the particular area where the road vehicle is employed. For example, the current US standards require that the guard should absorb at least 5650 joules (4166 ft.lb) of energy without deflecting more than 125 mm (5 inches). In general, of course, it will be desirable to provide sufficient restraint and resistance to movement of the beam which would exceed these minimum requirements. Also, as the above standard is met by a rigid guard which is substantially deformed in the test, it is desirable to provide a guard which yields sufficiently to meet this standard and, at the same time, can be reset to comply with the standard in a second or subsequent test. The frictionally yielding support means in the guards of the present invention enable the guards to meet this dual requirement. The beam itself is, of course, constructed from a material strong enough, and fabricated in such a way as to absorb the impact forces of a collision and transmit the forces to the support means without excessive deformation.

The European standard for rear underrun guards is expressed differently. According to the European standard, the guard must not pivot more than 12 inches (300 mm) when impacted by a one tonne passenger car travelling at 30 mph (48 kph). This standard also fails to specify any minimum and a guard which has no provision for movement will necessarily be deformed if the energy of the collision is not to be absorbed substantially entirely by the impacting vehicle. The latter situation, of course, concentrates the energy absorption and the damage in the colliding vehicle and increases the risk of death and injury to passengers.

In general, the guards of the present invention will yield somewhat by virtue of the sliding frictional restraints described above and, subsequently, in the accompanying drawings. The amount of the movement required to absorb energy of a moderate to serious collision, e.g. 3000 to 6000 joules will depend *inter alia* on the friction developed between the interacting surfaces of the guard (e.g. areas of contact, coefficient of friction and clamping pressure holding the surfaces together). However, the aim would be to achieve a movement of between about 2 and 5 inches, preferably about 2.5 to 4 inches, when absorbing impact energy of up to about 10,000 joules, typically about 3 to 4 inches when absorbing energy of abut 5000 to 5700 joules. As indicated above, it is also desirable that the guard should be capable of being re-set after a low to moderate impact, such as encountered when a heavy goods vehicle accidentally impacts an obstacle such as a loading dock. Because of the weight of modern freight vehicles, a low to moderate energy impact, e.g. in the range of 2 to 4000 joules, is generated by a heavy goods vehicle moving at only a few mph. The guards of the present invention are designed to yield in such cases without sustaining a significant permanent set or deformation, so that they can be re-set after such low to moderate impact and still comply with the relevant standard.

Thus, preferably, the frictional restraint is designed such that in the event of a vehicle colliding with the beam, the guard should be capable of absorbing at least about 5000 joules of energy (or the energy of a one tonne vehicle impacting at 30 mph), while the beam is displaced by not more than 12 inches. Preferably, the displacement is not more than about 5 or 6 inches and the energy absorbed is at least 5650 joules. Preferably, the beam should pivot by at least about 2 inches under such conditions.

Further features and advantages of the present invention will become apparent from the following description and accompanying drawings and photographs, in which:-
Figure 1 is a side elevation of a first embodiment of the underrun guard fitted to the chassis of a road vehicle;
Figure 2 is a view taken in the direction of the arrow X in Figure 1;
Figure 3 is an exploded view of a second embodiment of underrun guard in accordance with the invention;
Figures 4(a) and 4(b) are partial side elevations showing one manner of fitting the guard of Figure 3 to a vehicle;
Figure 5 is a diagrammatic side elevation of a guard in accordance with the invention fitted to a vehicle;
Figure 6 is a graphical representation of the force-displacement curve of a guard as shown in Figure 3 and was tested for compliance with the US federal standard for rear impact guards; and
Figures 7(a), 7(b) and 7(c) are partial side elevations showing a further embodiment of the invention which is a modification of the embodiment shown in Figures 3, 4(a) and 4(b).

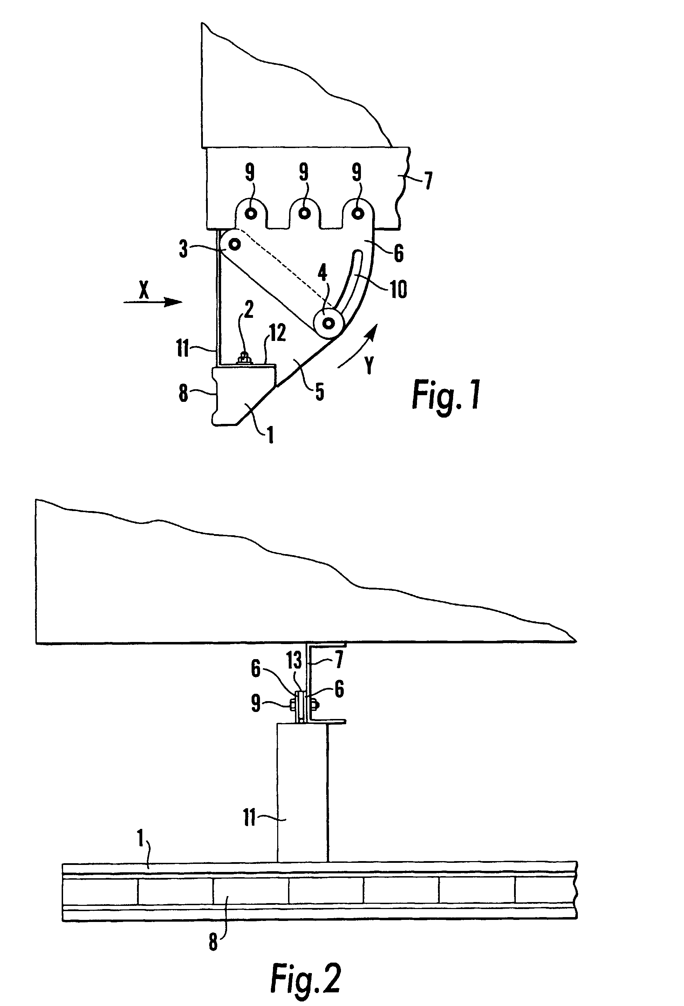

Referring to figures 1 and 2 of the drawings, the underrun guard comprises a tubular steel beam 1 which is connected to a support bracket comprising a steel plate 5, by means of a bolt 2. Plate 5 may be supported from the vehicle chassis beam 7 by a pair of plates 6. In some vehicles there is no chassis. Instead, the load-carrying part of the vehicle comprises a box member which is fitted near to the rear of the vehicle. The plates 6 may be formed with ears which are bolted to the beam 7 by bolts 9. As seen best in Figure 2, the plates 6 may be bolted to one side of the beam 7 with a spacer washer 13. Support plate 5 is pivotally linked to the plates 6 at a pivot axis 3 so that plate 5 is pivotable about the axis 3. Plates 6 are clamped on each side of plate 5 so that a segment of support plate 5 (as indicated by dotted lines) extends between the clamping plates 6. Aligned slots 10 are provided in the plates 6 which are clamped together by a clamping bolt 4 to sandwich the segment of the support plate 5. Bolt 4 passes through slots 10.

The rearmost portion of the support plate 5 may be provided with a reinforcing web 11 and this may be extended horizontally as indicated at 12 to provide a surface for clamping the beam to the plate 5. In the case of an impact to the road vehicle in the direction of the arrow X in Figure 1, the energy of impact will be absorbed by movement of the plate 5 in the same direction. This energy is absorbed by the support plate 5 being forced further between the plates 6 so that impact energy is absorbed by the friction of sliding movement between the surfaces of the plate 5 and the plates 6. Movement of the support plate 5 about the pivot 3 is guided by clamping bolt 4, moving in the slot 10. After impact the beam is pushed backwardly, rotating in the direction of the arrow Y, as shown in Figure 1.

After the impact, the beam can be returned to its original position, depending vertically from the chassis, by loosening the clamping bolt 4. When the underrun beam is returned to its original rest position, the clamping bolt is retightened to provide its designed energy absorbing characteristics. This can be done by tightening the bolts to a designed tightness by using a torque spanner set to release at the required setting.

The energy of rearward movement of the beam 1 is absorbed by a frictional contact between the plate 5 and the plate 6 and this can be increased by tightening of the clamping bolt 4. Normally, the bumper 1 would be supported by a pair of plates 5 at points close to the lateral edges of the vehicle. In order to increase the frictional restraining force resisting an impact, more than one plate 5 and more than two interleaved clamping plates 6 may be provided at each location, thereby increasing the frictional resistance.

A light reflective or fluorescent strip 8 may be affixed to the rearward face of the beam 1, within the longitudinal recess shown in Figure 1.

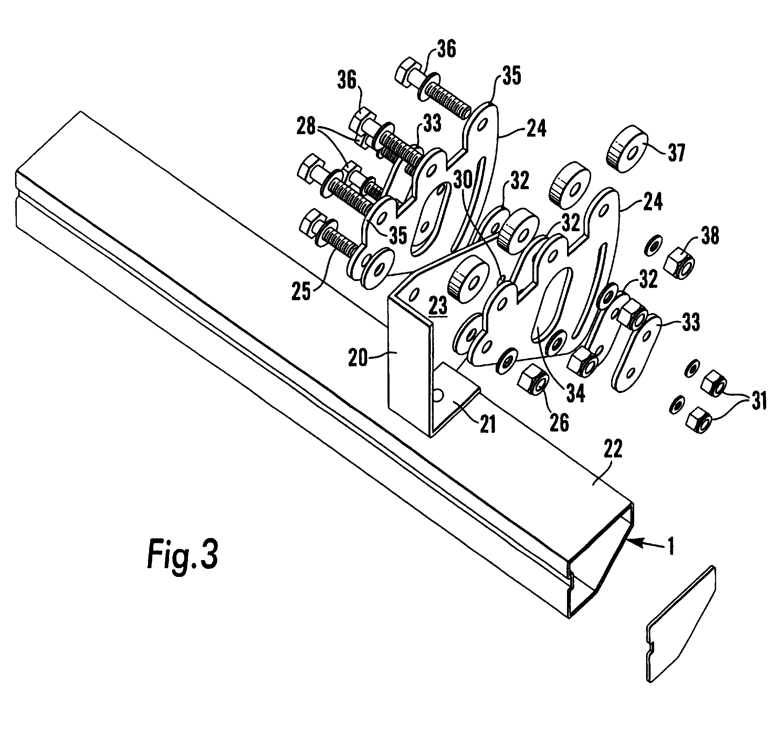

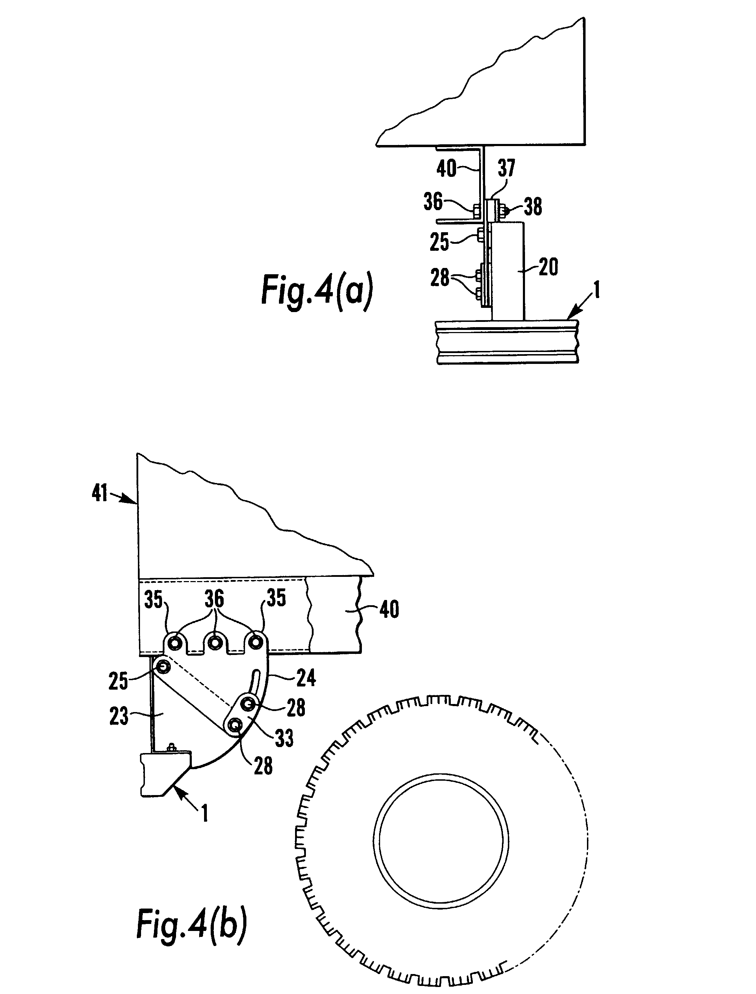

Figure 3 is an exploded view of a second embodiment of the invention and Figures 4(a) and (b) show the manner in which the guard shown in Figure 3 may be fitted to a vehicle. In Figure 3, a beam of hollow, box-section has a support bracket 20 which is fixed by a flange 21 to the upper face 22 of the beam. Bracket 20 includes an integral first plate 23 extending generally at right angles to the beam. A pair of plates 24 are disposed to sandwich the first plate 23 therebetween and are mounted for pivoting movement with respect to plate 23 by a common pivot bolt 25 which extends through aligned holes in the plates 24 and first plate 23, and engages with a nut 26. Washers 27 are provided between the clamping plates and the first plate. Plates 24 are formed as quadrants and when assembled, they overlap a segment of the first plate as seen best in Figure 4(b). The plates 24 and the first plate 23 are clamped together with clamping bolts 28 which pass through slots 29 formed in the plates and holes 30 (only one is seen in Figure 3), and are fastened by nuts 31. Sandwiched between each plate 24 and the first plate 23 is a frictional element 32 of frictional material. On the outer faces of the plates 24, a further frictional element 32 is clamped between the outer face of each plate 24 and a security plate 33. Plates 33 are conveniently formed from the same steel plate as the plates 24, and in the embodiment illustrated, are extracted from the plates 24 to leave a hole 34.

The plates 24 also carry at their top edges lugs or ears 35 for attaching the guard to the rear of a vehicle. For this purpose, attachment bolts 36 are provided. These bolts pass through aligned holes in the plates 24 and through spacer washers 37 and fixing nuts 38.

One method of attaching the guard to the longitudinal joists 40 at the rear end of a road vehicle 41 is shown in Figures 4(a), and 4(b). Bolts 36 are passed through holes in the joists 40 to fix the beam 1 to the rear end of the vehicle at two points across its width. For alternative fixing, the lugs 35 may be turned through 90 degrees for attachment to a horizontal surface. In some cases, in order to meet a height requirement from the ground, the support brackets may be attached by spacer fixing plates (not shown).

Before fitting the guard to the rear of the vehicle, the clamping bolts and lock-nuts 28 and 31 are tightened to a torque of about 300 ft/lbs.

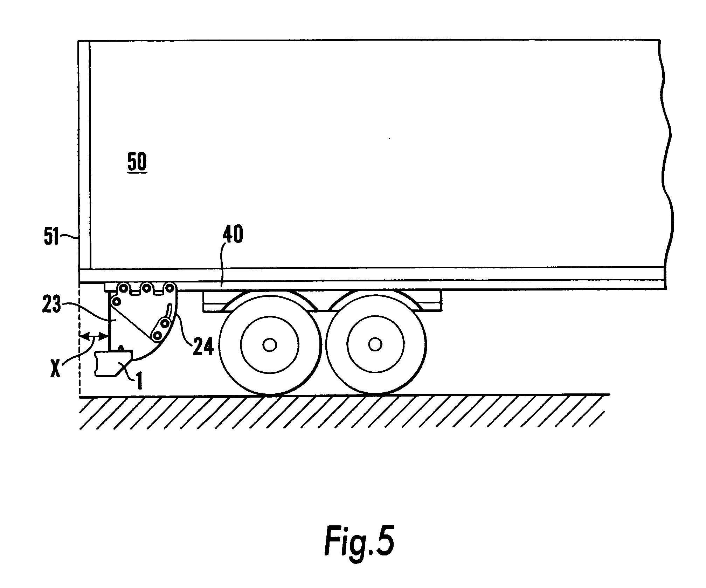

Figure 5 shows diagrammatically an underrun guard in accordance with the invention, fitted to the rear of a road trailer portion 50 of a vehicle. The guard is fitted to comply with regulations relating to the maximum and minimum heights above the ground (indicated in Figure 4(a)) and maximum dimension X by which the beam is inset from the rear extremity 51 of the vehicle. Currently, dimension X is 305 mm.

Current US Federal vehicle safety standards for rear impact guards require the guard to be subjected to loads of 50,000 N applied to two positions along the beam and a load of 100,000 N applied at a third point. The lower loads are applied on the center-line of the beam and at points which are 3/8 of the length of the beam from the center-line. The higher loads may be applied at points between 355 and 635 mm from the center-line.

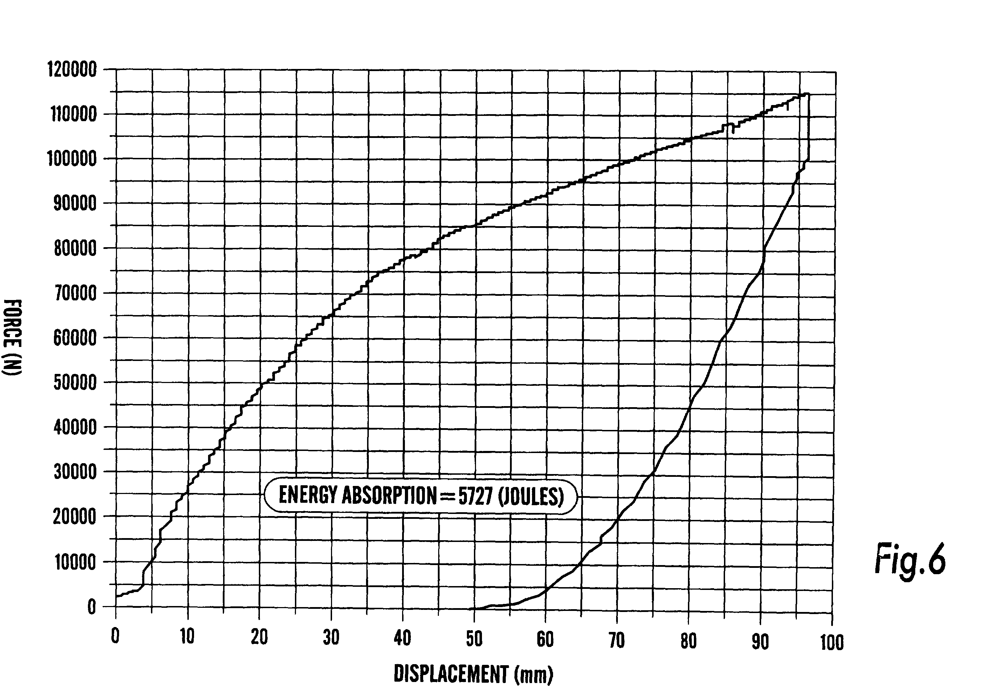

A guard constructed as shown in Figures 3 and 4(a), (b) & (c) was tested by this procedure and satisfied the standard. After the test, the guard could be reset and was ready for re-testing. A graphical plot of load-deflection obtained in the test applied at the higher load of 100,000 N is shown in Figure 6. The standard portion beneath the curve represents the energy absorbed which was greater than 5650 J. The deflection was less than 125 mm in the test.

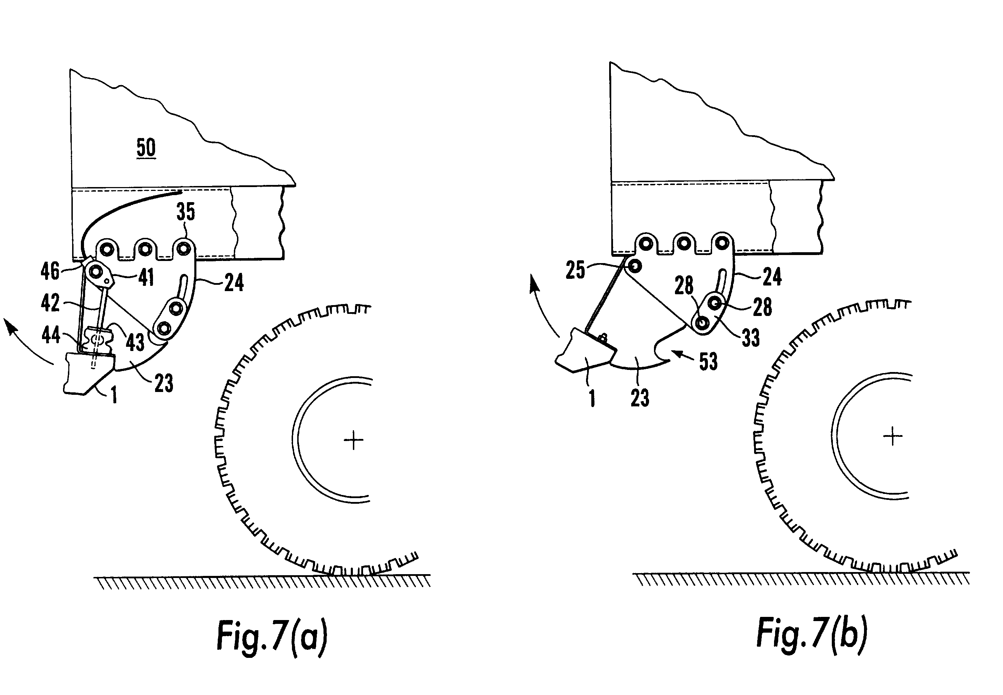

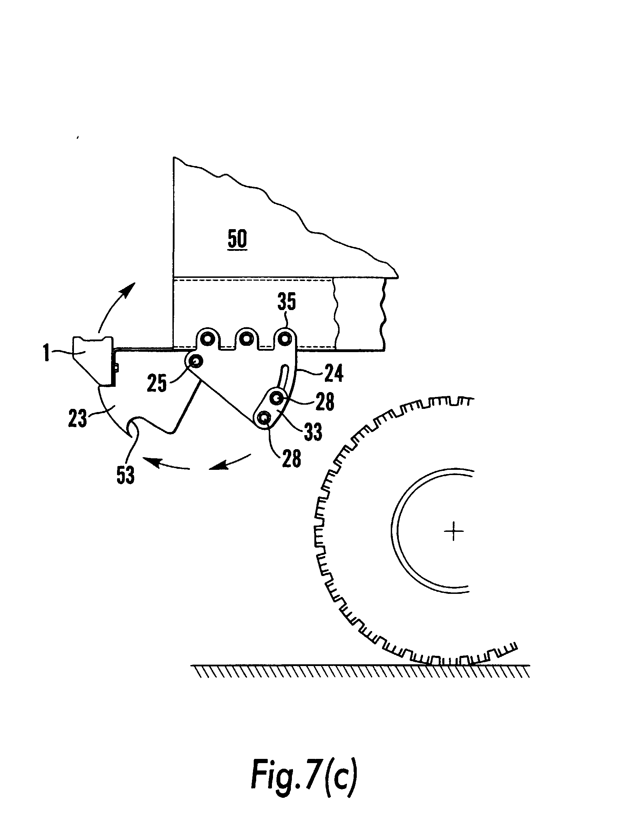

Figures 7(a), (b) and (c) depict a modified version of the underrun guard in accordance with the invention. This guard differs from that shown in Figures 4(a) and (b) essentially in that the plates 23 and 24 are connected to each other only at the pivot point 25. In the embodiment of Figures 7(a), (b) and (c) a friction element 32 is bolted to the inner faces of the plates 24 by bolts 28 and pads 33. Plate 23 is formed with an abutment surface 53 which is shaped to correspond with the external profile of the frictional element 32. As can be seen in Figures 7(a), (b) and (c), this allows the plate 23 and attached beam 1 to pivot rearwardly and upwardly by rotating away from the second plate 24 about pivot point 25. This enables the vehicle to rise up if it should encounter an obstacle in the road, such as a step ramp, e.g. when boarding or disembarking from a ferry. It also allows the beam to ride over fixed bollards or posts on which it may otherwise become 'hooked'.

The arrangement also allows the beam to be mounted nearer the ground, which may be required or desirable in some countries. Should the beam suffer a rear impact as described above in connection with other Figures, the embodiment of Figures 7(a), (b) and (c) operates in a similar way to the embodiment of Figures 4 (a) and (b). The abutment surface 40 is pressed against the frictional element 32 tending to drive it further between the plates 24. Such movement is resisted by the friction generated between the element and the plates 24. The abutment surface 53 need not directly impinge on the friction elements 32 so long as the forward pivoting movement of the plate 23 is transmitted to the friction element and such movement thereby restrained. For example, plate 23 may carry a member, e.g. a fork-shaped member which extends outside the plates 24 and carries an abutment surface which engages the plate or plates 33 on one or both external faces of the plates 24.

After the plate 23 have pivoted upwardly as shown in Figure 7(c), it may return to the rest position as shown in Figure 7(a) under gravity, or under the influence of a spring. This may, for example, be a spring acting between the rear end of the vehicle and the plate 23. A rubber spring, e.g. of the type shown in our UK Patent No. 2122551 is suitable. It may be desirable to provide a locking pin (not shown) to prevent the plate rising when not required. Such a pin may pass through the plates 23 and 24, slot(s) being provided in the plate or plates 24 to permit the plate 23 to move forwardly towards the vehicle (or the pin may be shearable) in the event of a rear end impact.

A further advantage of the embodiment shown in Figures 7(a), (b) and (c) is that it allows a sensor to be fitted more readily to the guard in order to detect relatively light contact with an obstruction, e.g. when the vehicle is reversed. This is achieved by providing a spring which is arranged to hold the abutment 53 just out of contact with the friction element or member connected thereto. As indicted in Figure 7(a), the pivot point 25 may carry an element 41 rotatable with the pivot 25. An arm 42 is pivotally linked to the element 41 and carries a plate 43 which is in contact with a tubular rubber spring 44. A guide rod 46 may extend through the spring and into the hollow beam 1. As can be seen, the spring 44 urges the plate 23 a short distance away from contact with the friction element 32, e.g. about 20 mm. Should the beam 1 touch an obstruction, e.g. a loading dock when reversing, the beam will be pushed forward against the spring 44, until the abutment comes into contact with the frictional element 32. Such movement can be detected, e.g. by a sensor shown diametrically at 46. The sensor is arranged to detect rotational movement of the element 41 and the sensor may be linked to activate a warning light or sound signal in the driver's cab. Suitable sensors are described in our UK Patent No. 2122551.

## Claims

1. An underrun guard for a road transport vehicle having a front and a rear end which comprises a beam (1) intended to be supported across the rear end of the vehicle by support means, said support means comprising a bracket (6) for attachment to the rear of the vehicle and a frictional restraint interposed between the bracket and the beam, said restraint being adapted to absorb impact energy applied to the beam and to permit the beam to pivot to prevent excessive damage to the beam in a low to moderate energy impact.

2. A guard according to claim 1 wherein the support means comprises at least one first plate (6) for attachment to the vehicle and at least one second plate (5) for attachment to the beam, said second plate being pivotally connected to the first plate to permit the beam to pivot about an axis extending transversely of the vehicle.

3. A guard as claimed in claim 2 wherein said frictional restraint comprises a high friction material between said first and second plates effective to restrain relative movement between said first and second plates.

4. A guard as claimed in claim 3 wherein said frictional restraint comprises an element of high friction material which is disposed between said first and second plates.

5. A guard as claimed in claim 3 or 4 wherein said frictional restraint includes clamping means for exerting a clamping pressure on the first and second plates thereby increasing sliding friction restraining relative movement of the first and second plates.

6. A guard as claimed in claim 2 wherein the frictional restraint comprises a friction element clamped to the first plate so as to be slidable relative to the first plate on application of a load to the element, and wherein the second plate has a portion which abuts said element directly or indirectly, whereby pivoting movement of the beam in a direction towards the vehicle is restrained by friction generated between the element and the first plate.

7. A guard as claimed in claim 6 wherein the second plate is freely pivotable away from abutment with the first plate, thereby lifting the beam and permitting the vehicle to pass over an upstanding obstacle.

8. A guard as claimed in claim 7 wherein the second plate is spring biased to return to a rest position in which it depends from the rear end of the vehicle.

9. A guard as claimed in claim 1 wherein the support means comprises a first plate for attachment to the vehicle or the beam, a pair of clamping plates for clamping a segment of the first plate therebetween and intended for attachment of the other of the beam and the vehicle, said first plate and said clamping plate being mounted for relative pivoting about a pivot point, whereby a collision impact to the beam causes said first plate to be forced further between the clamping plates thereby absorbing energy of said impact by generation of friction between the first plate and the clamping plates.

10. An underrun guard as claimed in claim 9 wherein at least one high friction element is clamped between the first plate and said clamping plates.

11. An underrun guard as claimed in claim 9 said first plate is rigidly attached to the beam and the clamping plates are integrally formed with bracket means for attachment to a vehicle.

12. An underrun guard as claimed in any one of claims 9 to 11 wherein said clamping plates are clamped together by at least one bolt, said bolt passing through slots formed in the clamping plates wherein the slots permit relative pivoting movement between the first plate and the clamping plates.

13. An underrun guard as claimed in any one of the preceding claims wherein the beam has a hollow, box-like structure.

14. An underrun guard as claimed in any one of the preceding claims wherein the beam has a longitudinally extending recess and a reflecting strip located within the recess and visible rearwardly when said guard is fitted to the rear of a vehicle.

15. A road transport vehicle having a front portion and a rear portion and an underrun guard fitted to said rear portion to reduce the risk of a second vehicle smaller than said road transport vehicle being forced under said rear portion in a collision, said guard comprising a beam extending horizontally substantially across said rear portion and support means for supporting said beam, said support means comprising a first plate fixedly attached to the beam or to said rear portion and a second plate fixedly attached to the other of said vehicle or beam, said first and second plates being pivotally connected to each other so that relative pivoting movement of said plates is resisted by a frictional restraint interposed between said plates.

16. A road transport vehicle as claimed in claim 15 wherein an element of friction material is sandwiched between said first and second plates.

17. A road transport vehicle as claimed in claim 15 wherein said first and second plates are fastened together by at least one fastening means, said fastening means passing through a slot in one or both plates to permit relative pivoting movement between said plates in the event of an impact to the beam.

18. A vehicle as claimed in claim 15 wherein said frictional restraint comprises a frictional element fastened to the first plate for sliding movement relative to the first plate and said second plate carries an abutment surface which abuts the frictional element directly or indirectly when said beam is pivoted towards the vehicle.
